# FASCICULE DE BREVET EUROPEEN

(11) **EP 2 954 221 B1**
(45) Date de publication et mention de la délivrance du brevet: **04.01.2017**
(21) Numéro de dépôt: 14708613.6
(22) Date de dépôt: 04.02.2014
(51) Int. Cl.: F16C 37/00, F16C 17/02, F16C 17/04

(54) **PALIER AÉRODYNAMIQUE À FEUILLES VENTILÉ**
BELÜFTETES AERODYNAMISCHES FOLIENLAGER
VENTILATED AERODYNAMIC FOIL BEARING

(30) Priorité: 06.02.2013 FR 1351022
(43) Date de publication de la demande: 16.12.2015
(73) Titulaire: Liebherr-Aerospace Toulouse SAS, 31200 Toulouse (FR)
(72) Inventeur: ROCCHI, Jérôme, F-31380 Roqueseriere (FR); GRAU, Grégory, F-82210 Castelmayran (FR); AURY, Jérôme, 81600 Gaillac (FR)
(74) Mandataire: Cabinet BARRE LAFORGUE & associés
(86) Numéro de dépôt international: PCT/FR2014/050195
(87) Numéro de publication internationale: WO 2014/122388

(56) Documents cités:
- EP-A1- 2 463 536
- US-A- 4 621 930
- US-A- 5 885 004
- US-A1- 2005 013 515

## Description

L'invention concerne un palier aérodynamique à feuilles, que ce soit un palier radial ou un palier de butée axiale, comportant des moyens de ventilation et/ou de refroidissement des feuilles permettant de créer un film fluide de sustentation entre une partie fixe et une partie mobile en rotation par rapport à cette partie fixe.

Dans le présent texte, on désigne par « palier aérodynamique » un palier radial ou un palier de butée permettant la rotation d'une pièce par rapport à une autre sur un film de fluide, en particulier un gaz et plus spécifiquement de l'air. De tels paliers sont en général utilisés pour de très grandes vitesses de rotation et des charges axiales ou radiales relativement faibles par rapport aux charges supportées par d'autres types de paliers (à billes ou hydrodynamiques par exemple). Par ailleurs, dans le présent texte, on emploie les termes « avant », « arrière » et leurs dérivés (antérieur, postérieur, précédent, suivant, etc.) en référence au sens de rotation du palier.

De tels paliers sont en général constitués d'une partie fixe sur laquelle des lames ou des feuilles élastiques sont fixées par un bord « avant » orienté orthogonalement au sens de rotation et dont le bord opposé (arrière) s'étend, dans le sens de rotation, en direction de la partie mobile afin de réaliser un « coin d'air » permettant d'assurer la sustentation de la partie mobile.

De tels paliers sont par exemple utilisés dans les turbines et compresseurs de ventilation des systèmes de conditionnement d'air d'aéronefs. Cependant, ces dispositifs ont récemment évolué pour être entraînés par des moteurs électriques. Cette évolution entraîne de nouvelles contraintes sur les paliers utilisés dans ces dispositifs. Par exemple, la présence d'un moteur électrique de forte puissance est une source de chaleur élevant la température de l'air utilisé dans les paliers. De même, l'absence ou la réduction du diamètre des turbines d'entraînement ne permet plus de disposer d'air frais de ventilation ou de refroidissement de ces dispositifs et cause une augmentation de la charge axiale sur les paliers de butée ce qui a pour effet d'augmenter la température du film d'air.

Or, afin de faciliter le démarrage et de réduire l'usure des butées et des paliers considérés, il est usuel de revêtir les feuilles formant les patins sur lesquels s'appuie le film d'air avec un revêtement à haut pouvoir lubrifiant tel qu'un revêtement de fluoro-carbone stratifié ou de graphite et fluoro-polymère. Ces revêtements présentent des températures limites d'utilisation qu'il convient de respecter ce qui est de plus en plus difficile avec l'élévation de température des films d'air à l'intérieur des paliers.

On connaît du document US 4 621 930 une butée à feuilles comportant un rotor mobile en rotation autour d'un axe, et une partie fixe constituée d'un disque support sur lequel est fixé un disque portant des feuilles élastiques de forme sensiblement trapézoïdale couvrant chacune un secteur circulaire, régulièrement réparties sur la périphérie du disque. Une couronne élastique constituée d'une série de plaquettes alternées dans le sens axial est insérée entre le disque support et le disque portant les feuilles élastiques pour soutenir et fournir une précharge axiale à ce dernier. Des rangées d'orifices de refroidissement sont réalisées radialement dans le disque portant les feuilles élastiques au-dessous du bord libre de celles-ci.

Cependant, dans une telle butée, l'air de refroidissement traversant les orifices de refroidissement est puisé au-dessous du disque portant les feuilles élastiques sous l'effet de la dépression causée par les fuites radiales entre le rotor et les feuilles élastiques. L'air éjecté par les fuites radiales est ensuite réaspiré au-dessus du disque support et circule ainsi en circuit fermé. De ce fait, la température de cet air circulant en circuit fermé augmente et peut dépasser les températures limites d'utilisation des revêtements.

La présente invention a pour but de proposer un palier à feuilles dans laquelle la température du film d'air peut être contrôlée afin de limiter l'élévation de température à l'intérieur du palier.

L'invention a également pour but de proposer un palier à feuilles permettant d'évacuer la chaleur issue du cisaillement du film de gaz entre l'extrémité libre des feuilles et le disque du rotor.

L'invention a en outre pour but de proposer un palier à feuilles dans lequel les fuites latérales de gaz sont compensées.

L'invention vise également à proposer un palier à feuilles présentant une capacité de charge améliorée.

Pour ce faire, l'invention concerne un palier aérodynamique à feuilles, comportant une partie, dite rotor, mobile en rotation autour d'un axe et une partie fixe, dite stator, ledit stator comprenant une première structure, dite support adaptée pour supporter en regard du rotor une seconde structure, dite sustentateur, ledit sustentateur comportant :
- une pluralité de feuilles élastiques régulièrement réparties, s'étendant sur un secteur circulaire et fixées par un bord, dit bord de fixation, sur une surface du sustentateur en regard du rotor,
- des rangées d'orifices, dits orifices de ventilation, traversant le sustentateur depuis la face en regard du support jusqu'à la face portant les feuilles élastiques, les orifices de ventilation débouchant sensiblement entre un bord, dit bord libre, de chaque feuille élastique opposé au bord de fixation de celle-ci et le bord de fixation de la feuille suivante,
caractérisé en ce que le support comprend une cavité présentant des rainures s'étendant sous les rangées d'orifices de ventilation et au moins une rainure circulaire coupant lesdites rainures, ladite rainure circulaire étant adaptée pour être alimentée par un flux de gaz de refroidissement sous pression et le répartir pour équilibrer la pression de gaz à l'intérieur desdites rainures de manière à refroidir la face inférieure de chaque feuille et à fournir un apport de gaz frais au-dessus de la feuille suivante pour compenser des déperditions de gaz aux extrémités du palier..

En disposant des rainures au-dessous et parallèlement aux rangées d'orifices de ventilation, elles-mêmes parallèles aux bords libres des feuilles élastiques, l'apport de gaz de refroidissement s'effectue sur toute la largeur des feuilles élastiques et les orifices de ventilation peuvent être de diamètre réduit pour diminuer la consommation de gaz frais. En reliant chacune de ces rainures d'alimentation des orifices de ventilation par au moins une rainure circulaire servant à la répartition du gaz, le flux de gaz est réparti de manière équilibrée entre toutes les feuilles élastiques. De plus, en effectuant cet apport de gaz frais dans le film de gaz s'étendant entre les extrémités libres des feuilles élastiques et le rotor, ce film de gaz conserve une température modérée, ce qui favorise la sustentation du rotor et limite l'échauffement du bord libre des feuilles élastiques sous l'effet du cisaillement du gaz, permettant ainsi d'utiliser un revêtement antifriction sur celles-ci. Ce faisant, le rotor lui-même est refroidi par le flux de gaz de refroidissement et les éventuelles déformations localisées de celui-ci sont limitées, permettant d'améliorer la stabilité du palier. En outre, la pression et la quantité de gaz frais injectée sont très inférieures à celles qui seraient nécessaires dans un palier aérostatique dans lequel c'est la pression statique de l'air injecté qui réalise la sustentation. Dès lors, les moyens de génération du flux de gaz de refroidissement sont de taille et de poids réduits et consomment moins d'énergie. Par exemple, l'utilisation d'un tel palier dans un compresseur d'air à entrainement électrique de diamètre 60 à 80 mm ne consomme que 5 g à 20 g d'air par seconde, prélevé sur la sortie du compresseur, alors qu'un palier similaire refroidi par une circulation d'air parasite (fuite d'air) en consomme au moins deux fois plus et qu'un compresseur aérostatique en consomme 100 fois plus.

Avantageusement et selon l'invention, le palier est un palier radial, le rotor étant formé par un arbre tournant, le stator comprenant un support et un sustentateur en forme de bagues concentriques, la cavité du support comportant des rainures axiales. Dans un tel palier, qui permet de guider en rotation l'arbre tournant en induisant des frottements réduits, la disposition des rangées d'orifices de ventilation et de leur rainure d'alimentation associée parallèlement à l'axe de rotation du palier permet l'alimentation en gaz de refroidissement de manière homogène sur toute la largeur du palier. La rainure circulaire forme alors dans le stator un cylindre concentrique à l'axe du palier.

Avantageusement et selon l'invention, les feuilles élastiques sont de forme rectangulaire, leur bord de fixation fixé sur une face interne du sustentateur selon une génératrice de celui-ci, chaque feuille s'étendant, selon le sens de rotation du rotor, jusqu'à son bord libre. Les feuilles élastiques sont préférablement soudées sur le sustentateur par leur bord de fixation mais peuvent également être fixées par collage, rivetage ou sertissage dans une gouttière, etc.

Avantageusement et selon l'invention, le palier est un palier de butée, le rotor étant formé par une plaque cylindrique tournante, fixée coaxialement à un arbre autour ou en bout de celui-ci, le stator comprenant un support et un sustentateur en forme de plaques cylindriques fixes, coaxiales entre elles et avec le rotor, placées en regard de celui-ci. Un tel palier permet d'encaisser les efforts axiaux produits par le compresseur porté par le rotor. Dans ce mode de réalisation, la cavité du support comporte des rainures radiales réparties de manière à correspondre avec les rangées d'orifices de ventilation du sustentateur et au moins une rainure circulaire coupant les rainures radiales pour équilibrer la pression de gaz à l'intérieur de celles-ci. Le flux de gaz de refroidissement est ainsi réparti également au niveau de chaque feuille élastique, le long du bord fixe de celle-ci.

Avantageusement et selon l'invention, les feuilles élastiques sont de forme sensiblement trapézoïdales, leur bord de fixation fixé sur une face du sustentateur en regard du rotor selon un rayon du sustentateur, chaque feuille s'étendant, selon le sens de rotation du rotor, jusqu'à son bord libre. De préférence, les feuilles élastiques sont conformées de manière à couvrir chacune un secteur circulaire du disque de sustentation et sont disposées à intervalles réguliers de façon à recouvrir le disque sans recouvrement ou avec un recouvrement minimum des secteurs entre eux.

Avantageusement et selon l'invention, chaque feuille élastique est individuellement en appui sur un raidisseur entre son bord de fixation et son bord libre. Ainsi, la déformation des feuilles élastiques est minimisée lorsque le rotor ne tourne pas et repose en appui sur les feuilles. Il en va de même lors de variations de la charge axiale exercée sur le rotor lorsqu'il est en rotation.

Avantageusement et selon l'invention, le raidisseur est formé d'une bande ondulée dont les ondulations sont sensiblement parallèles au bord de fixation de chaque feuille élastique. Ce mode de réalisation du raidisseur permet d'apporter un effet ressort sous les feuilles élastiques permettant d'absorber des variations de charge axiale.

Avantageusement et selon l'invention, les feuilles élastiques sont recouvertes d'un matériau antifriction. Ainsi, le démarrage et la mise en sustentation du rotor sont facilités et l'usure des feuilles élastiques est minimisée.

L'invention concerne également un palier à feuilles caractérisé en combinaison par tout ou partie des caractéristiques mentionnées ci-dessus ou ci-après.

D'autres buts, caractéristiques et avantages de l'invention apparaîtront au vu de la description qui va suivre et des dessins annexés dans lesquels :
- la figure 1 représente une coupe transversale d'un palier à feuilles radial selon l'invention,
- la figure 2 est un schéma en vue de côté d'un palier de butée selon l'invention,
- la figure 3 est une vue en perspective éclatée d'un palier de butée selon l'invention.

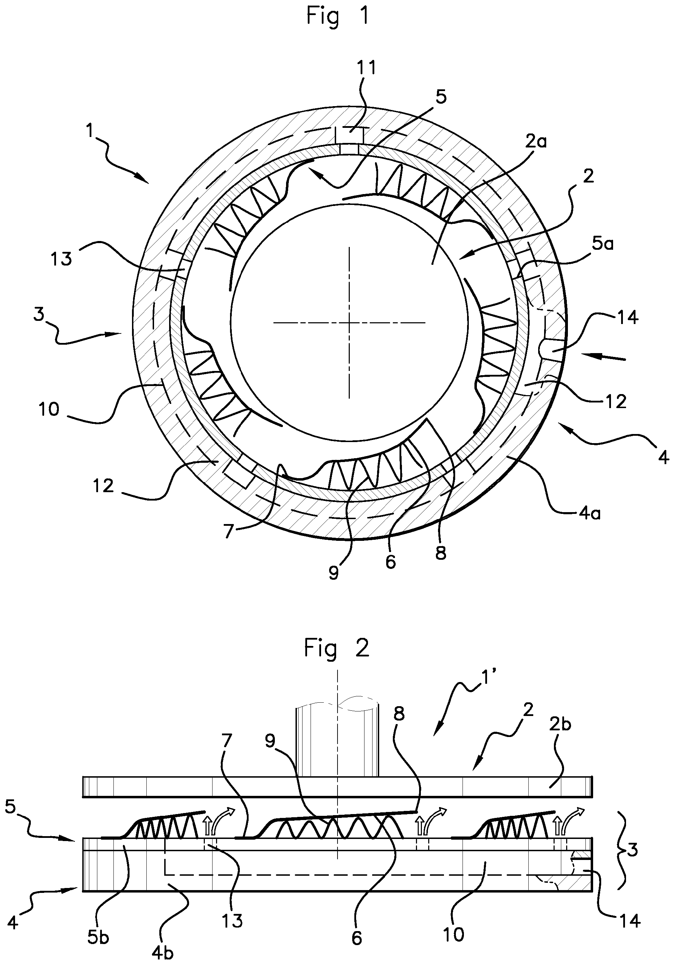

Le palier 1 représenté sous la forme d'un palier radial à la figure 1 comporte un rotor 2 sous la forme d'un arbre cylindrique et un stator 3 comprenant un support 4 sous la forme d'un fourreau 4a extérieur et un sustentateur 5 sous la forme d'une bague 5a coaxiale au fourreau 4a et montée à l'intérieur de celui-ci. Le diamètre extérieur de la bague 5a du sustentateur 5 est ajusté au diamètre intérieur du fourreau 4a. Le serrage de l'ajustement et/ou des moyens de fixation (non représentés) maintiennent le fourreau et la bague immobiles l'un par rapport à l'autre dans une position prédéterminée.

Le sustentateur 5 comporte également une pluralité de feuilles 6 élastiques, de forme sensiblement rectangulaire, réparties régulièrement à l'intérieur de la bague 5a. Chaque feuille 6 est fixée à la surface intérieure de la bague 5a par un bord, dit bord de fixation 7, s'étendant parallèlement à l'axe de la bague selon une génératrice de cette surface. Le bord de fixation 7 est rendu solidaire de la bague 5a du sustentateur par des moyens connus en eux-mêmes tels que soudage, rivetage, sertissage dans une fente, etc.

Le bord opposé, dit bord libre 8, de la feuille 6 s'étend vers l'arrière, dans le sens de rotation et, radialement, en direction du rotor 2 afin de réaliser un « coin d'air » permettant d'assurer la sustentation de celui-ci sur un film de gaz. De préférence, le bord libre 8 de chaque feuille 6 s'étend sensiblement jusqu'au-dessus du bord de fixation 7 de la feuille suivante de manière à ce que la somme des secteurs angulaires couverts par les feuilles 6 soit approximativement égale à 360 degrés pour couvrir toute la circonférence interne du palier.

Pour permettre un support et un centrage approximatif de l'arbre lorsqu'il n'est pas en rotation et pour limiter la déflexion des feuilles 6, par exemple lors de variations de la charge radiale en fonctionnement, celles-ci sont soutenues par un raidisseur 9 formé d'une bande ondulée, préférentiellement métallique, de largeur sensiblement égale à la longueur des feuilles 6 et dont l'axe des ondulations est sensiblement parallèle au bord de fixation 7 de la feuille 6. Le raidisseur 9 est fixé au-dessous de la feuille 6, sur la face interne de la bague 5a, au moins par le bord avant de sa première ondulation afin de permettre une déformation élastique du raidisseur 9.

En avant du bord de fixation 7 de chaque feuille 6, la bague 5a du sustentateur 5 est percée d'une rangée d'orifices 13 de ventilation selon une génératrice du cylindre. Le fourreau 4a du support 4 comporte, sur sa face en contact avec la bague 5a, une cavité 10 comportant des rainures axiales 11 en regard des rangées d'orifices 13. De préférence, ces rainures axiales 11 ne débouchent pas aux extrémités du fourreau 4a. Les rainures axiales sont reliées entre elles par au moins une rainure circulaire 12 dans laquelle débouche une entrée de gaz 14.

En fonctionnement, l'arbre 2a est en rotation par rapport au stator 3 et donc aux feuilles 6. Le film d'air entrainé par la rotation de l'arbre est comprimé dans l'espace entre la feuille et l'arbre (appelé convergent) et forme un champ de pression permettant la sustentation de l'arbre à une distance de quelques microns des feuilles 6. De l'air de ventilation est injecté par l'entrée de gaz 14 dans la rainure circulaire 12 et réparti dans les rainures axiales 11. L'air de ventilation est alors injecté par les orifices 13 entre le bord libre 8 d'une feuille et le bord de fixation 7 de la suivante et vient balayer au moins partiellement la face inférieure du bord libre 8 des feuilles 6. L'air frais de ventilation est ainsi également injecté en avant du bord de fixation 7 de la feuille suivante avant d'être entrainé au-dessus de celle-ci où il se mélange avec le film d'air pour refroidir celui-ci avant d'être compressé dans le convergent. L'air de ventilation permet ainsi de refroidir plus particulièrement le bord libre 8 de la feuille sous laquelle il est injecté par les orifices 13, ce bord libre étant le point d'échauffement maximal du palier. De plus, l'augmentation de la quantité d'air compressé dans le convergent augmente en conséquence le champ de pression et donc la portance de l'arbre, améliorant ainsi la capacité de charge radiale du palier. En outre, l'air de ventilation mixé avec l'air ambiant du palier permet de diminuer la température de celui-ci et de remplacer la quantité d'air qui s'échappe aux extrémités du palier.

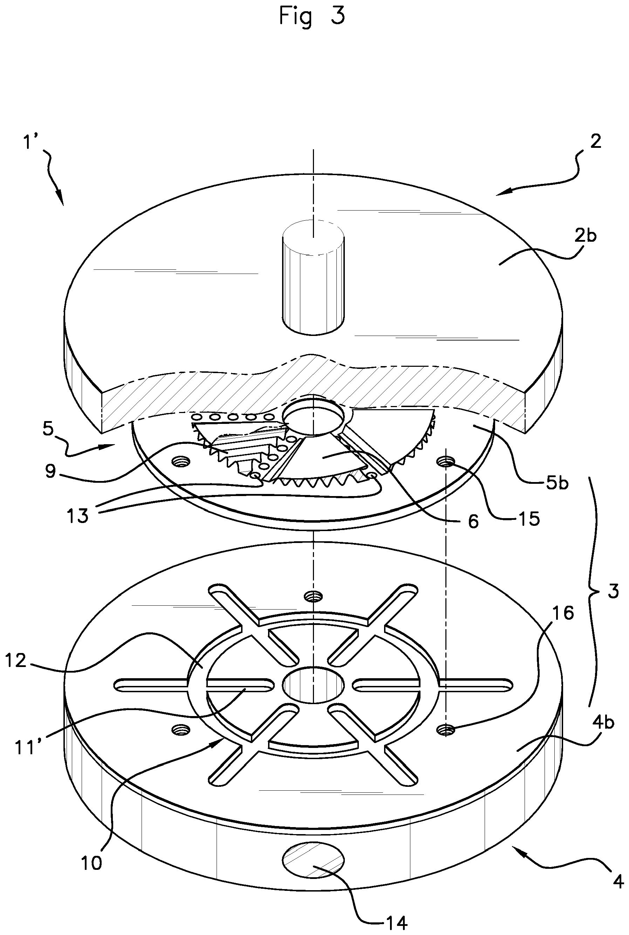

Le même principe peut être appliqué également à un palier de butée axiale tel que représenté aux figures 2 et 3. Le palier de butée axiale, nommé pour plus de commodité la butée 1'comporte également un rotor 2 comprenant une plaque 2b cylindrique solidaire d'un arbre tournant. La butée 1' comporte également un stator 3 comprenant un support 4 sous la forme d'un disque support 4b et d'un sustentateur 5 comprenant un disque 5b. La plaque cylindrique 2b, le disque support 4b et le disque sustentateur 5b sont coaxiaux et ont pour axe commun l'axe de rotation de la butée. Le disque sustentateur 5b est fixé sur le disque support 4b dans une position angulaire prédéterminée par l'intermédiaire de vis (non représentées) au travers des trous de fixation 15 et 16 ménagés respectivement dans le disque sustentateur et le disque support.

Le disque sustentateur 5b comprend également, sur sa face en regard de la plaque 2b du rotor, une pluralité de feuilles 6 élastiques, de forme sensiblement trapézoïdale, régulièrement réparties sur le disque sustentateur de manière à couvrir chacune un secteur angulaire centré sur l'axe de rotation de la butée. Les feuilles 6 sont fixées sur le disque 5b par un bord de fixation 7 selon une direction radiale, orthogonale au sens de rotation de la butée et s'étendent vers l'arrière, dans le sens de rotation jusqu'à un bord libre 8 sensiblement parallèle à la direction radiale. Dans la direction axiale, les feuilles 6 comportent une rampe abrupte s'étendant du bord de fixation 7 en direction du rotor 2 suivie d'une partie en pente douce montant vers le rotor, voire même sensiblement parallèle à celui-ci. Chaque feuille 6 définit ainsi entre son bord de fixation 7 et son bord libre 8 un convergent dans lequel le film d'air existant entre la feuille 6 et la plaque 2b du rotor est comprimé.

Les feuilles 6 sont individuellement en appui par leur face en regard du disque sustentateur 5b sur un raidisseur 9 formé de manière analogue au raidisseur de la figure 1 par une bande ondulée, préférentiellement métallique, de largeur correspondant à celle de la feuille 6. L'axe des ondulations du raidisseur 9 est sensiblement parallèle au bord de fixation 7 de la feuille 6. Le raidisseur 9 est lui aussi fixé sur le disque sustentateur 5b, au-dessous de la feuille 6 élastique, au moins par le bord avant de sa première ondulation de manière à permettre une déformation élastique du raidisseur dans la direction axiale.

En avant de chaque bord de fixation 7 des feuilles 6, et au-dessous du bord libre de la feuille 6 précédente, le disque sustentateur 5b est perforé d'une rangée d'orifices 13 de ventilation s'étendant radialement parallèlement au bord de fixation 7.

Au-dessous du disque sustentateur 5b, la face en regard du disque support 4b est creusée d'une cavité 10 dans laquelle débouche une entrée de gaz 14 permettant l'alimentation de la cavité 10 en air de ventilation sous une pression supérieure à la pression atmosphérique. La cavité 10 comprend une pluralité de rainures radiales 11' s'étendant au-dessous et en regard des rangées d'orifices 13 de ventilation et au moins une rainure circulaire 12 reliant les rainures radiales 11' afin de distribuer l'air de ventilation de manière homogène entre ces rainures.

Au repos, lorsque le rotor est immobile, la plaque cylindrique 2b est en appui sur les feuilles 6, elles-mêmes soutenues par les raidisseurs 9. Lors de la mise en rotation du rotor, la plaque 2b frotte (frottement sec) sur les feuilles 6. Afin de limiter le couple de mise en rotation, ces feuilles sont avantageusement revêtues d'un revêtement antifriction, à haut pouvoir lubrifiant tel qu'un revêtement en fluoro-carbone stratifié par exemple.

En fonctionnement, la plaque cylindrique 2b est en rotation par rapport au stator 3 et donc aux feuilles 6. Le film d'air entrainé par la rotation de la plaque est comprimé dans le convergent entre la feuille et la plaque 2b et forme un champ de pression permettant la sustentation de la plaque à une distance de quelques microns des feuilles 6.

Afin de limiter l'échauffement du revêtement des feuilles 6, de l'air de ventilation est injecté par l'entrée de gaz 14 dans la rainure circulaire 12 et réparti dans les rainures radiales 11'. L'air de ventilation passe ainsi par les orifices 13 de ventilation et vient balayer la face inférieure du bord libre 8 des feuilles 6 avant d'être entrainé au-dessus de la feuille suivante où il se mélange avec le film d'air pour être compressé dans le convergent. L'air de ventilation permet ainsi de refroidir plus particulièrement le bord libre 8 de la feuille sous laquelle il est injecté par les orifices 13, ce bord libre étant le point d'échauffement maximal du palier. De plus, l'augmentation de la quantité d'air compressé dans le convergent augmente en conséquence le champ de pression et donc la portance du rotor, améliorant ainsi la capacité de charge axiale du palier. En outre, l'air de ventilation mixé avec l'air ambiant du palier permet de diminuer la température de celui-ci et de remplacer la quantité d'air qui s'échappe radialement sous l'effet de la force centrifuge. On a pu également constater que l'air de ventilation vient également balayer la plaque 2b du rotor 2 et la refroidir, permettant ainsi d'en limiter les éventuelles déformations thermiques susceptibles de nuire à la régularité de l'épaisseur du film d'air et donc de limiter la capacité de charge axiale de la butée 1'.

Bien entendu, cette description est donnée à titre d'exemple illustratif uniquement et l'homme du métier pourra par exemple faire varier le nombre et la largeur angulaire des feuilles 6 élastiques qui forment les patins de sustentation, de manière à former une surface de sustentation quasi continue ou au contraire, si les charges radiales (respectivement axiales) auxquelles sont soumis ces paliers sont faibles, à prévoir des intervalles conséquents entre les patins pour améliorer le refroidissement.

## Revendications

1. Palier (1, 1') aérodynamique à feuilles, comportant une partie, dite rotor (2), mobile en rotation autour d'un axe et une partie fixe, dite stator (3), ledit stator comprenant une première structure, dite support (4) adaptée pour supporter en regard du rotor une seconde structure, dite sustentateur (5), ledit sustentateur comportant :
• une pluralité de feuilles (6) élastiques régulièrement réparties, s'étendant sur un secteur circulaire et fixées par un bord, dit bord de fixation (7), sur une surface du sustentateur en regard du rotor,
• des rangées d'orifices, dits orifices (13) de ventilation, traversant le sustentateur (5) depuis la face en regard du support (4) jusqu'à la face portant les feuilles élastiques, les orifices de ventilation débouchant sensiblement entre un bord, dit bord libre (8), de chaque feuille (6) élastique opposé au bord de fixation (7) de celle-ci et le bord de fixation (7) de la feuille suivante,
**caractérisé en ce que** le support (4) comprend une cavité (10) présentant des rainures (11, 11') s'étendant sous les rangées d'orifices (13) de ventilation et au moins une rainure (12) circulaire coupant lesdites rainures, ladite rainure circulaire étant adaptée pour être alimentée par un flux de gaz de refroidissement sous pression et le répartir pour équilibrer la pression de gaz à l'intérieur desdites rainures de manière à refroidir la face inférieure de chaque feuille (6) et à fournir un apport de gaz frais au-dessus de la feuille (6) suivante pour compenser des déperditions de gaz aux extrémités du palier.

2. Palier selon la revendication 1, **caractérisé en ce que** le palier (1) est un palier radial, le rotor (2) étant formé par un arbre (2a) tournant, le stator (4) comprenant un support (4a) et un sustentateur (5) en forme de bagues concentriques, la cavité (10) du support (4a) comportant des rainures (11) axiales.

3. Palier selon la revendication 1 ou 2, **caractérisé en ce que** les feuilles (6) élastiques sont de forme rectangulaire, leur bord de fixation (7) fixé sur une face interne du sustentateur (5) selon une génératrice de celui-ci, chaque feuille s'étendant selon le sens de rotation du rotor (2) jusqu'à son bord libre (8).

4. Palier selon la revendication 1, **caractérisé en ce que** le palier est un palier (1') de butée, le rotor (2) étant formé par une plaque (2b) cylindrique tournante, fixée coaxialement à un arbre autour ou en bout de celui-ci, le stator (3) comprenant un support (4) et un sustentateur (5) en forme de plaques (4b, 5b) cylindriques fixes, coaxiales entre elles et avec le rotor, placées en regard de celui-ci, la cavité (10) du support (4) comportant des rainures (11') radiales.

5. Palier selon la revendication 1 ou 4, **caractérisé en ce que** les feuilles (6) élastiques sont de forme sensiblement trapézoïdales, leur bord de fixation (7) fixé sur une face du sustentateur (5) en regard du rotor selon un rayon du sustentateur, chaque feuille s'étendant selon le sens de rotation du rotor (2) jusqu'à son bord libre (8).

6. Palier selon l'une quelconque des revendications 1 à 5, **caractérisé en ce que** chaque feuille (6) élastique est individuellement en appui sur un raidisseur (9) entre son bord de fixation (7) et son bord libre (8).

7. Palier selon la revendication 6, **caractérisé en ce que** le raidisseur (9) est formé d'une bande ondulée dont les ondulations sont sensiblement parallèles au bord de fixation (7) de chaque feuille (6) élastique.

8. Palier selon l'une quelconque des revendications 1 à 7, **caractérisé en ce que** les feuilles (6) élastiques sont recouvertes d'un matériau antifriction.

## Patentansprüche

1. Aerodynamisches Folienlager (1, 1'), das einen Teil, Rotor (2) genannt, der in Drehung um eine Achse beweglich ist, und einen stationären Teil, Stator (3) genannt, umfasst, wobei der Stator eine erste Struktur, Träger (4) genannt, umfasst, die angepasst ist, um gegenüber dem Rotor eine zweite Struktur, Stützer (5) genannt, zu tragen, wobei der Stützer Folgendes umfasst:
• eine Mehrzahl elastischer Folien (6), die regelmäßig verteilt ist, die sich auf einem kreisförmigen Sektor erstreckt und an einem Rand, Befestigungsrand (7) genannt, auf einer Oberfläche des Stützers gegenüber dem Rotor befestigt ist,
• Reihen von Öffnungen, Belüftungsöffnungen (13) genannt, die den Stützer (5) von der Seite gegenüber dem Träger (4) bis zu der Seite, die die elastischen Folien trägt, durchquert, wobei die Belüftungsöffnungen im Wesentlichen zwischen einem Rand, freier Rand (8) genannt, jeder elastischen Folie (6), der dem Befestigungsrand (7) dieser entgegengesetzt ist, und dem Befestigungsrand (7) der darauf folgenden Folie münden,
**dadurch gekennzeichnet, dass** der Träger (4) einen Hohlraum (10) umfasst, der Rillen (11, 11') aufweist, die sich unter den Reihen von Belüftungsöffnungen (13) erstrecken, und mindestens eine kreisförmige Rille (12), die die Rillen schneidet, wobei die kreisförmige Rille angepasst ist, um durch einen Kühlgasfluss unter Druck versorgt zu werden und ihn zu verteilen, um den Gasdruck im Inneren der Rillen derart auszugleichen, dass die untere Seite jeder Folie (6) gekühlt wird, und eine Frischgaszufuhr oberhalb der darauf folgenden Folie (6) zu liefern, um Gasverluste an den Enden des Lagers zu kompensieren.

2. Lager nach Anspruch 1, **dadurch gekennzeichnet, dass** das Lager (1) ein Radiallager ist, wobei der Rotor (2) durch eine Drehwelle (2a) gebildet ist, wobei der Stator (4) einen Träger (4a) und einen Stützer (5) in Form konzentrischer Ringe umfasst, wobei der Hohlraum (10) des Trägers (4a) axiale Rillen (11) umfasst.

3. Lager nach Anspruch 1 oder 2, **dadurch gekennzeichnet, dass** die elastischen Folien (6) rechteckige Form haben, ihr Befestigungsrand (7) auf einer Innenseite des Stützers (5) gemäß seiner Mantellinie befestigt ist, wobei sich jede Folie gemäß der Rotationsrichtung des Rotors (2) bis zu ihrem freien Rand (8) erstreckt.

4. Lager nach Anspruch 1, **dadurch gekennzeichnet, dass** das Lager ein Drucklager (1') ist, wobei der Rotor (2) durch eine zylindrische drehende Platte (2b) gebildet ist, die koaxial an einer Welle um oder an deren Ende befestigt ist, wobei der Stator (3) einen Träger (4) und einen Stützer (5) in Form stationärer zylindrischer Platten (4b, 5b) umfasst, die zueinander und zu dem Rotor koaxial sind, die diesem gegenüber platziert sind, wobei der Hohlraum (10) des Trägers (4) radiale Rillen (11') umfasst.

5. Lager nach Anspruch 1 oder 4, **dadurch gekennzeichnet, dass** die elastischen Folien (6) im Wesentlichen trapezförmig sind, ihr Befestigungsrand (7) auf einer Seite des Stützers (5) gegenüber dem Rotor gemäß einem Radius des Stützers befestigt ist, wobei sich jede Folie gemäß der Rotationsrichtung des Rotors (2) bis zu ihrem freien Rand (8) erstreckt.

6. Lager nach einem der Ansprüche 1 bis 5, **dadurch gekennzeichnet, dass** jede elastische Folie (6) einzeln auf einem Versteifer (9) zwischen ihrem Befestigungsrand (7) und ihrem freien Rand (8) in Auflage ist.

7. Lager nach Anspruch 6, **dadurch gekennzeichnet, dass** der Versteifer (9) aus einem welligen Band gebildet ist, dessen Wellungen im Wesentlichen zu dem Befestigungsrand (7) jeder elastischen Folie (6) parallel sind.

8. Lager nach einem der Ansprüche 1 bis 7, **dadurch gekennzeichnet, dass** die elastischen Folien (6) mit einem Reibungsschutzwerkstoff beschichtet sind.

## Claims

1. Aerodynamic foil bearing (1, 1'), comprising a rotor (2), that is rotationally mobile about an axis, and a fixed stator (3), said stator comprising support (4), adapted to support, facing said rotor, a lift device (5), said lift device comprising:
• a plurality of evenly distributed resilient foils (6), extending over a circular sector and fixed via a fixing edge (7), on a surface of said lift device facing said rotor,
• rows of ventilation holes (13), passing through said lift device (5) from the face facing said support (4) up to the face bearing said resilient foils, said ventilation holes substantially emerging between a trailing edge (8), of each resilient foil (6) opposite the fixing edge (7) thereof and the fixing edge (7) of the next foil, wherein said support (4) comprises a cavity (10) having grooves (11, 11') extending under said rows of ventilation holes (13) and at least one circular groove (12) intersecting said grooves, said circular groove being adapted to be supplied by a flow of pressurized cooling gas and to distribute said gas in order to balance the gas pressure inside said grooves in order to cool the inner face of each foil (6) and to provide a supply of fresh gas above the next foil (6) to compensate for gas losses at the ends of said bearing.

2. Bearing as claimed in claim 1, wherein said bearing (1) is a radial bearing, said rotor (2) being formed by a rotary shaft (2a), said stator (4) comprising a support (4a) and a lift device (5) in the form of concentric rings, said cavity (10) of said support (4a) comprising axial grooves (11).

3. Bearing as claimed in claim 1 or 2, wherein said resilient foils (6) are of rectangular shape, with their fixing edge (7) being fixed on an inner face of said lift device (5) along a generating line thereof, each foil extending in the direction of rotation of said rotor (2) up to its trailing edge (8).

4. Bearing as claimed in claim 1, wherein said bearing is a thrust bearing (1'), said rotor (2) being formed by a rotatable cylindrical plate (2b), coaxially fixed to a shaft about or at the end of said shaft, said stator (3) comprising a support (4) and a lift device (5) in the form of fixed cylindrical plates (4b, 5b), coaxial to each other and to said rotor, placed facing said rotor, said cavity (10) of said support (4) comprising radial grooves (11').

5. Bearing as claimed in claim 1 or 4, wherein said resilient foils (6) are of substantially trapezoidal shape, with their fixing edge (7) being fixed on a face of said lift device (5) facing said rotor in a radius of said lift device, each foil extending in the direction of rotation of said rotor (2) up to its trailing edge (8).

6. Bearing as claimed in any one of claims 1 to 5, wherein each resilient foil (6) is individually in abutment against a stiffener (9) between its fixing edge (7) and its trailing edge (8).

7. Bearing as claimed in claim 6, wherein said stiffener (9) is formed by a corrugated strip, the corrugations of which are substantially parallel to the fixing edge (7) of each resilient foil (6).

8. Bearing as claimed in any one of claims 1 to 7, wherein said resilient foils (6) are coated with an anti-friction material.
